# EUROPÄISCHE PATENTSCHRIFT

(11) **EP 0 612 293 B1**
(45) Veröffentlichungstag und Bekanntmachung des Hinweises auf die Patenterteilung: **04.12.1996**
(21) Anmeldenummer: 92923732.9
(22) Anmeldetag: 17.11.1992
(51) Int. Cl.: B60R 21/32, G01L 1/20

(54) **SENSOR FÜR EINE GASSACK-AUFPRALL-SCHUTZEINHEIT**
SENSOR FOR A GAS BAG IMPACT PROTECTION UNIT
CAPTEUR POUR UN DISPOSITIF A SAC DE GAZ DE PROTECTION CONTRE LES CHOCS

(30) Priorität: 19.11.1991 DE 4137976
(43) Veröffentlichungstag der Anmeldung: 31.08.1994
(73) Patentinhaber: MST Automotive GmbH Automobil-Sicherheitstechnik, 63743 Aschaffenburg (DE)
(72) Erfinder: BOSSLER, Hans-Jürgen, D-6115 Münster (DE); KREUZER, Martin, D-8751 Kleinwallstadt (DE)
(74) Vertreter: Fuchs, Luderschmidt & Partner Patentanwälte
(86) Internationale Anmeldenummer: EP9202641
(87) Internationale Veröffentlichungsnummer: WO9309978

(56) Entgegenhaltungen:
- WO-A-90/06247
- DE-A- 2 212 190
- ELECTRO CONFERENCE RECORD Bd. 16, April 16-18, 1991, NEW-YORK, US Seiten 666 - 668 , XP288444 DR. STUART I. YANIGER 'Force sensing resistors: a review of the technology'

## Beschreibung

Die Erfindung betrifft einen Sensor zum Einschalten des Zündstroms auf den Zünder des Gasgenerators einer im Bereich der Seiten eines Fahrzeugs, vorzugsweise Personenkraftwagens, untergebrachten Gassack-Aufprall-Schutzeinheit.

Bekanntlich wird durch die Verstärkung der Türholme und/oder durch das Anbringen von Zusatzträgern in den Türen von Fahrzeugen eine Verbesserung des Schutzes für die Fahrzeuginsassen, insbesondere bei seitlichen Aufprall-Unfällen, erreicht (Z.: ACE-LENKRAD, 10/91, S. 20/21).

Die Schutzwirkung wird erheblich verbessert, wenn fahrgastzellenseitig im Bereich der Seiten des Fahrzeugs eine Gassack-Aufprall-Schutzeinheit untergebracht ist, die beim seitlichen Aufprall des Fahrzeugs auf ein massives Hindernis ausgelöst wird. So ist beispielsweise in der DE-C-3 422 263 für Kraftfahrzeuge eine Sicherheitseinrichtung zum Schutz gegen den Seitenaufprall beschrieben, bei der über die Karosseriedeformation ein im Seitenbereich des Kraftfahrzeugs angeordneter und mit Gas gefüllter Vorratsbehälter den im Dachholm befindlichen Gassack aufbläst. Durch ein aufpralltypisches Verzögerungsmerkmal löst ein Sensor den Zündstrom für den Gasgenerator der Gassack-Aufprall-Schutzeinheit aus. Das Anzündelement zündet sich einschließlich des Feststofftreibmittels, das als Gaslieferant für das Aufblähen des Gassacks dient. Üblicherweise werden dabei Sensoren eingesetzt, die auch für eine im Lenkrad integrierte und/oder auf der Beifahrerseite im Bereich des Armaturenbretts angeordnete Gassack-Aufprall-Schutzeinheit benutzt werden. Die elektronische Algorithmusauswertung eines solchen Sensors hat bedingt durch die Rechenzeiten von etwa 10 ms eine relativ große Zeitspanne; nach 10 ms fängt der Gassack an sich aufzublasen, indem der Zündstrom auf den Zünder des Gasgenerators fließt, der wiederum die Zündpille und damit den Treibsatz zündet. Wegen der andersgearteten Raumverhältnisse zwischen Fahrzeuginsassen und der Seite des Kraftfahrzeugs ist die genannte Rechenzeit für die Erkennung eines seitlichen Aufpralls nicht geeignet.

In der WO-A-90/06247 ist ein Sensor zum Schalten eines Zündstroms auf einen Zünder eines Gasgenerators einer im Bereich der Seitentür eines Fahrzeugs angeordneten Gassack-Aufprall-Schutzeinheit beschrieben, wie er weitgehend dem Oberbegriff des Anspruchs 1 entspricht. Der Sensor besteht aus einer an den Holmen der Karosseriekonstruktion angebrachten Kontaktfläche, einem auf dieser unmittelbar aufliegenden Isolator und einer auf diesein unmittelbar aufliegenden Leiterbahnfolie mit kamm- bzw. fingerartig ineinandergreifenden Leitermustern.

Aus ELECTRO CONFERENCE RECORD, Band 16, 16.-18. April 1991, New York, Seiten 666-668, XP000288444, Dr. Stuart I. Yaninger, "Force sensing resistors: A review of the technology", ist prinzipiell ein aus haibleitenden Polymerfolien mit unmittelbar aufliegender Leiterbahnfolie aufgebauter kraftsensierender Widerstand und ein entsprechend damit aufgebauter Kraft- oder Stoßsensor bekannt, dessen Wirkung auf die auftretende Druckkraft abgestimmt werden kann und in Grenzen reproduzierbar ist.

Es ist die Aufgabe der vorliegenden Erfindung, den bekannten Folienschalter derart weiterzubilden, daß dessen Wirkung auf die im Falle eines seitlichen Aufpralls auftretende Druckkraft abgestimmt werden kann und in Grenzen reproduzierbar ist.

Die Lösung dieser Aufgabe erfolgt durch die im Anspruch angegebenen Merkmale.

Die Halbleiterpolymer-Folie bildet einen Isolator zwischen den beiden Schaltflächen und leitet nur, wenn von außen eine Beaufschlagung mittels einer durch einen Seitenaufprall verursachten Druckkraft erfolgt. Je höher der ausgeübte Druck ist, um so höher ist die Leitfähigkeit der Halbleiterpolymer-Folie. Diese Wirkung ist auf die in dem Sensor im Falle eines seitlichen Aufpralls auftretende Druckkraft abgestimmt und in diesen Grenzen reproduzierbar. Der Sensor verhält sich elektrisch wie ein veränderbarer Widerstand. Die durch den Sensor fließenden Ströme liegen in der Regel im Mikroampèrebereich. Je nach Druckbelastung verringert sich der innere Widerstand des Sensors von > 5MΩ bis 1kΩ. Da der Flächenfolienschalter keine beweglichen Teile besitzt, lassen sich Schalterflächen beliebiger Geometrie ohne Aussetzer in den Kontaktflächen verwenden. Die Flächenfolienschalter besitzen eine Reaktionszeit von 1 bis 3 ms und sind deshalb auch gegen laute Geräusche, Tonschwingungen oder Oberwellenfrequenzen unempfindlich.

Die Erfindung ist in der Zeichnung beispielhaft dargestellt und wird nachstehend näher erläutert.

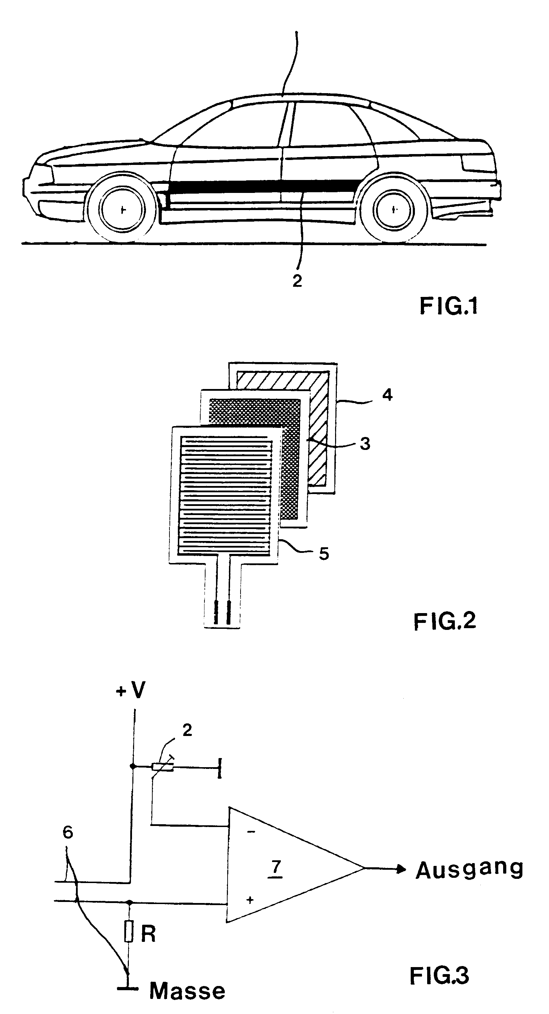

Bei einer in Fig. 1 schematisch dargestellten Seitenansicht eines Personenkraftwagens (1) ist auf den Türen ein streifenförmiger Flächenfolienschalter (2) angebracht. Dieser Flächenfolienschalter (2) besteht gemäß Fig. 2 aus einer Halbleiterpolymerfolie (3), die als Isolator zwischen der unmittelbar an den Türen angebrachten Kontaktfläche (4) und der außen liegenden Leiterbahn-Folie (5) dient.

Der Flächenfolienschalter (2) ist gemäß Fig. 3 mit dem Stromkreis (6) des Personenkraftwagens (1) verbunden. Der Strom fließt über den Verstärker (7) zur Zündeinrichtung des Gasgenerators der Gassack-Aufprall-Schutzeinheit.

## Patentansprüche

1. Sensor zum Schalten des Zündstroms auf einen Zünder des Gasgenerators einer im Bereich der Seiten eines Fahrzeugs (1), vorzugsweise Personenkraftwagens, angeordneten Gassack-Aufprall-Schutzeinheit, die aus einem Flächenfolienschalter (2) aus wenigstens einer an den Türen und/oder Holmen der Karosseriekonstruktion angebrachten Kontaktfläche (4) und einer Leiterbahn-Folie (5) besteht, dadurch gekennzeichnet, daß die Kontaktfläche (4) und die Leiterbahn-Folie (5) durch eine Halbleiterpolymer-Folie (3) von einander getrennt sind.

## Claims

1. A sensor for switching the ignition current to an igniter of the gas generator of an airbag impact safety unit, arranged in the area of the sides of a motor vehicle (1), for preference a passenger car, which consists of a surface film switch (2), of at least one contact surface (4), located on the doors and/or the spars of the bodywork structure, and a conductor path film (5), characterised by the fact that the contact surface (4) and the conductor path film (5) are separated from one another by a semi-conductor polymer film (3).

## Revendications

1. Capteur pour commuter le courant d'allumage sur une amorce du générateur de gas d'une unité de protection antichocs à coussin de gas agencée dans la zone des côtés d'un véhicule (1), de préférence d'une voiture particulière, ladite unité étant constituée d'un commutateur à membrane de surface (2) formé d'au moins une surface de contact (4) agencée sur les portes et/ou les longerons de la carrosserie et d'une membrane conductrice (5), caractérisé en ce que la surface de contact (4) et la membrane conductrice (5) sont séparées par un film de polymère semi-conducteur (3).
